Europäisches Patentamt

European Patent Office

Office européen des brevets

(19)

(11) Publication number: **0 009 237**
**B1**

(12) **EUROPEAN PATENT SPECIFICATION**

(45) Date of publication of patent specification: **29.12.82**

(51) Int. Cl.³: **H 04 N 9/46**

(21) Application number: **79103514.0**

(22) Date of filing: **19.09.79**

(54) Chrominance signal circuit in color television receiver.

(30) Priority: **19.09.78 JP 117281/78**

(43) Date of publication of application:
**02.04.80 Bulletin 80/7**

(45) Publication of the grant of the patent:
**29.12.82 Bulletin 82/52**

(84) Designated Contracting States:
**CH DE GB IT NL**

(56) References cited:
**GB - A - 1 186 907**
**GB - A - 1 225 833**
**GB - A - 1 239 052**
**GB - A - 1 490 725**

(73) Proprietor: **SANYO ELECTRIC CO., LTD.**
**18, Keihanhondori 2-chome**
**Moriguchi-shi Osaka-fu (JP)**

(72) Inventor: **Inoue, Fukashi**
**558-182, Heguri-cho Hidehara**
**Ikoma-gun Nara-ken (JP)**

(74) Representative: **Glawe, Delfs, Moll & Partner**
**Patentanwälte**
**Postfach 26 01 62 Liebherrstrasse 20**
**D-8000 München 26 (DE)**

Courier Press, Leamington Spa, England.

Chrominance signal circuit in color television receiver

Background of the Invention
*Field of the Invention*
The present invention relates to a chrominance signal circuit in a color television receiver, more specifically a PAL system color television receiver, wherein a subcarrier is quadrature modulated by two color signals and one of the modulation axes is 180° reversed for every second line and the phase of a burst signal is swung in synchronism with the reversion of the one modulation axis.

*Description of the Prior Art*
A circuit of this kind is described in GB—A—1 225 833. In this circuit the color burst is phase shifted so that a phase shift of 90° between two lines is obtained. This, however, requires circuit components which are difficult to be implemented in an integrated circuit.

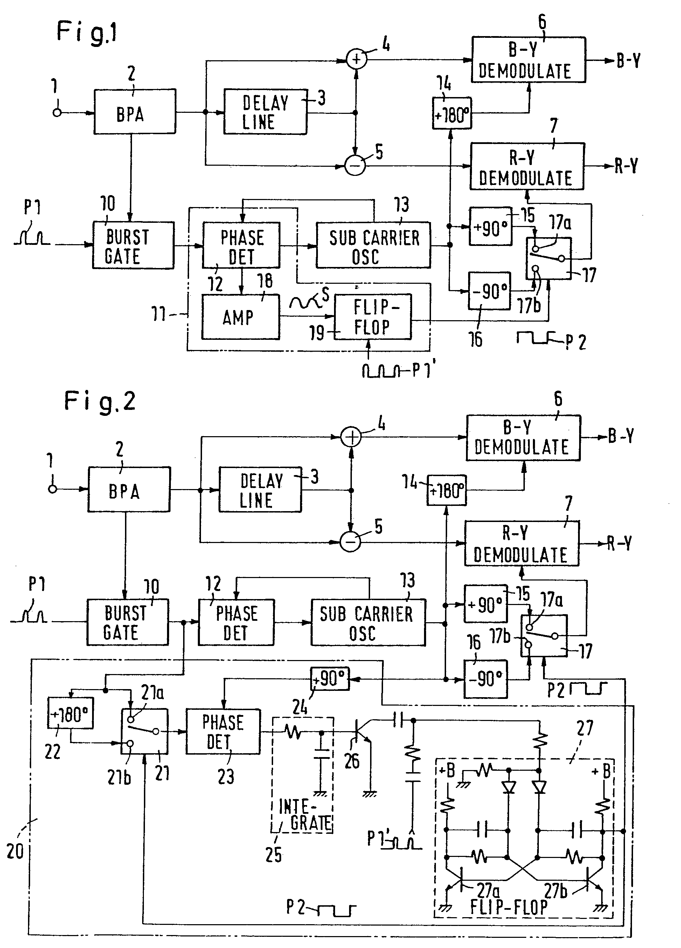

Further Prior Art which constitutes the background of the invention will be described with reference to Fig. 1, which shows a block diagram of a chrominance signal circuit in a conventional PAL system color television receiver using a PAL system color television signal which comprises a subcarrier suppressed chrominance signal wherein the subcarrier is qudrature modulated by two color signals and one of the modulation axis is 180° reversed for every second line and a burst signal the phase of which is swung in synchronism with the reversion of the one modulation axis. The signal is applied to the input terminal 1 and is amplified at the predetermined band width by means of a bandpass amplifier 2 and then applied to a one-line dealy line 3, an adder 4 and a subtractor 5. The signal as one-line delayed by the one-line delay line 3 is applied to another input of each of the adder 4 and the subtractor 5. The adder 4 makes addition of these two input signals to provide a B—Y signal and the subtractor 5 makes subtraction of these two signals to provide an R—Y signal. The B—Y signal is applied to a B—Y demodulator 6 and the R—Y signal is applied to an R—Y demodulator 7, respectively.

On the other hand, only a bust signal is extracted from the output signal of the bandpass amplifier 2 by means of a burst gate 10 which is driven responsive to a horizontal pulse P1. The burst signal thus extracted is applied to a phase detector 12 included in an identification circuit 11. Another input of the phase detector 12 is connected to receive a subcarrier which is fed back from a subcarrier oscillator 13. The output of the phase detector 12 is integrated by means of an integration means, not shown, and is applied to control the oscillation phase of the subcarrier oscillator 13. The detected output of the phase detector 12 is directly applied to an amplifier 18, which comprises a resonance circuit the resonance frequency of which is selected to be a 1/2 horizontal frequency. Accordingly, a sine wave S having the frequency commensurate with the 1/2 horizontal frequency is obtained from the amplifier 18, which sine wave is applied to a flip-flop 19. A driving input of the flip-flop 19 is connected to receive a horizontal pulse P1' the phase of which is slightly delayed as compared with that of the above described horizontal pulse P1.

The subcarrier obtained from the subcarrier oscillator 13 is applied through a +180° phase shifter 14 to the B—Y demodulator 7 as a synchronization input. Similarly, the subcarrier obtained from the subcarrier oscillator 13 is applied through a +90° phase shifter 15 and a —90° phase shifter 16 to contacts 17a and 17b of a PAL switch 17, respectively. The PAL switch 17 is connected to receive the output of the above described flip-flop 19, so that the same is controllably switchable responsive to the pulse P2 of the 1/2 horizontal frequency. Accordingly, the PAL switch 17 alternately provides a subcarrier as +90° phase shifted and the subcarrier as —90° phase shifted for each line to the R—Y demodulator 7 as a synchronization signal.

Without the identification circuit 11, the switching operation by the PAL switch 17 could be initiated at an initial condition as arbitrarily determined. In such a situation, it could happen that the modulation axis of the chrominance signal is applied to the R—Y demodulator 7 and the subcarrier which represents the demodulation axis applied to the PAL switch 17 are exactly the same phase or the reversed phase. Accordingly, depending on an initial condition of the PAL switch 17, it could happen that the polarity of the demodulated output of the R—Y demodulator 7 is improper for the succeeding circuit components, in which case a hue of an image is reproduced on a television screen could be considerably disturbed. The identification circuit 11 as shown in Fig. 1 is provided to prevent such an inconvenience. Such an identification circuit is described in German Patents Nos. 1,240,919 and 1,248,708 and the counterpart British Patent No. 1,138,911, for example. Accordingly, a description of the detail of a configuration and operation of the circuit is omitted.

The conventional chrominance signal circuit as shown in Fig. 1 involves a problem to be solved as to be described in the following. More specifically, the identification circuit 11 shown in Fig. 1 is structured such that phase detection is made with respect to the burst signal as extracted and the subcarrier, whereupon a sine wave of a 1/2 horizontal frequency is provided, which is applied to the flip-flop 19 to trigger the same. Accordingly, on the occasion of reception of a weak electric wave, for example, it could happen that a burst signal disappears as a function of a noise occurring at the burst signal period, a pseudo signal is inputted by virtue of a noise having the same frequency as the burst signal frequency, and the like, whereby the output of the phase detector 12 could be disturbed and as a result the sine wave signal S obtained from the amplifier 18 could be disturbed. Therefore, a triggering phase of the flip-flop 19 could be accordingly disturbed, with the result that the phase of the 1/2 horizontal frequency pulse P2 could be accordingly disturbed. Thus, provision of such a conventional identification circuit can not completely solve a problem of a lateral noise component of different hues on a television screen.

## Summary of the Invention

Briefly described, the present invention is characterized in that the burst signal is phase shifted by a predetermined phase for every second line, the burst signal thus phase shifted for every second line is subjected to phase detection with respect to the subcarrier, the phase detected output is applied to an integration circuit having a predetermined time constant, and the output of the integration circuit is applied to control a state change of a two-state circuit for controlling the reversion of the subcarrier. Preferably, the time constant of the integration circuit is selected to be longer than at least two-line period.

According to the present invention since a state change of the two-state circuit is controlled responsive to the output of the above described integration circuit, a characteristic with respect to an incoming noise and the like is considerably improved and as a result a problem of a lateral line noise of different hues which occurred on a television screen of a conventional television receiver on the occasion of reception of a weak electric wave, in particular, is advantageously eliminated. Furthermore, since the burst signal of all lines are utilized to control a state change of the two-state circuit, an information quantity is increased and accordingly the operation becomes stabilized.

According to a preferred embodiment of the present invention, the burst signal is phase reversed for every second line, whereupon the phase detection thereof is made with respect to the subcarrier. The two-state circuit may comprise a bistable circuit or a flip-flop and a direct current voltage obtained from the integration circuit is applied to control a state change of the flip-flop. In a given example, the above described direct current voltage obtained from the integration circuit is applied to prevent a horizontal pulse input from being applied to the flip-flop as a driving input. In another example, the above described direct current voltage obtained form the integration circuit is applied to disable a one side circuit portion of the flip-flop.

Accordingly, a principal object of the present invention is to provide an improved chrominance signal circuit in a color television receiver, which comprises an identification circuit of an extremely stabilized operation for eliminating an influence caused by disturbance of a burst signal.

## Brief Description of the Drawings

Fig. 1 is a block diagram showing an example of a chrominance signal circuit in a conventional PAL color television receiver which constitutes the background of the invention;

Fig. 2 is a block diagram showing one embodiment of the present invention;

Figs. 3A and 3B are graphs for explaining the operation of the Fig. 2 embodiment;

Fig. 4 is a graph for explaining a stabilized operation of the Fig. 2 embodiment.

## Description of the Preferred Embodiment

Fig. 2 is a block diagram showing one embodiment of the present invention. Referring to Fig. 2, it is first pointed out that an identification circuit 20 of the Fig. 2 embodiment is different from the identification circuit 11 of the Fig. 1 conventional circuit. More specifically, the identification circuit 20 comprises a switch means 21, which constitutes one of the essential features of the present invention. The switch means 21 is, as in case of the PAL switch 17, switch controllable responsive to the pulse P2 of a 1/2 horizontal frequency obtained from a flip-flop 27. The switch means 21 includes two switch contacts 21a and 21b. The contact 21a is connected to receive a burst signal extracted by the burst gate 10. The contact 21b of the switch means 21 is connected to receive an output of a +180° phase shifter 22, which is connected to receive a burst signal extracted by burst gate 10. Accordingly, the switch means 21 serves to provide the burst signal as 180° reversed for every second line to a phase detector 23. Another input of the phase detector 23 is connected to receive the output of a +90° phase shifter 24 for phase shifting by +90° the subcarrier obtained from the subcarrier oscillator 13. The phase detector 23 is adapted such that when the phase difference of both signals is 90° the output thereof becomes zero volt, while the pull-in ranges thereof is 4,433619 MHz ± 500 Hz, for example. The output of the phase detector 23 is applied to an integration circuit 25. The time constant of the integration circuit 25 is selected to be approximately 10 lines. A direct current voltage obtained from the integration circuit 25 is applied to a base electrode of a switching transistor 26. An emitter electrode of the switching transistor 26 is connected to the ground and a collector electrode of the switching transistor 26 is connected through a series connection of a capacitor and a resistor to a drive input terminal of a flip-flop 27. The junction of the above described resistor and the capacitor is connected to receive a horizontal pulse P1' through another series connection of a resistor and a capacitor. The output of the flip-flop 27 is withdrawn as a 1/2 horizontal frequency pulse P2 for switch controlling the PAL switch 17 and the switch means 21.

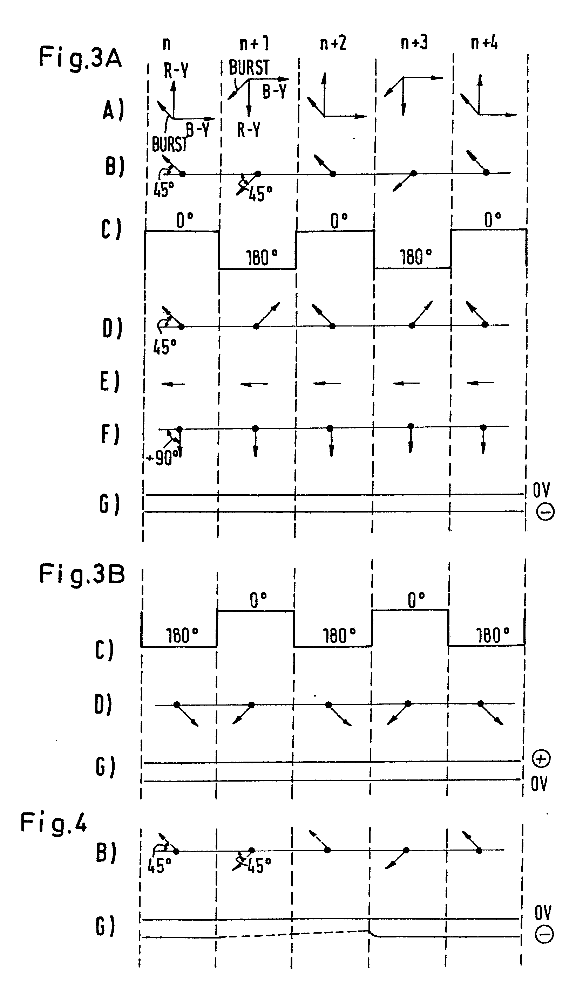

Now an operation of the embodiment shown will be described in the following. Fig. 3A shows waveforms of the signals at various portions in the embodiment occurring over arbitrary five lines from n line to n + 4 line. Referring to Fig. 3A, A shows in a vector fashion a subcarrier suppression modulated chrominance signal and a burst signal included in a color television signal applied to the input terminal 1. The burst gate 10 serves to extract only the burst signal from such television signal. Accordingly, the burst signal as extracted from the burst gate 10 is swung, i.e. the phase of the burst signal is changed, in association with the reversion of one modulation axis in the quadrature modulation, as shown in B in Fig. 3A. The switch means 21 serves to reverse the phase of the burst signal for every second line responsive to the 1/2 horizontal frequency pulse P2 as shown as C in Fig. 3A. Thus, the output of the switch means 21 is obtained as shown as D in Fig. 3A. E in Fig. 3A shows the phase of the output of the subcarrier oscillator 13. As seen from E in Fig. 3A, the subcarrier is of the leftward phase, i.e. the phase position commensurate with that of —(B—Y). Such subcarrier is phase shifted by the +90° phase shifter 24, thereby to provide the signal as shown as F in Fig. 3A.

The phase detector 23 serves to compare the phases of the burst signal as shown as D in Fig. 3A and the subcarrier as 90° phase shifted as shown as F in Fig. 3A. Then the output of the phase detector 23 becomes of a negative polarity. Accordingly, the output of the integration circuit 25 for storing or integrating the above described negative polarity output is obtained as a negative constant direct current voltage as shown as G in Fig. 3A.

In case where the 1/2 horizontal frequency pulse obtained from the flip-flop 27 is of a reversed situation as shown as C in Fig. 3B, as compared with C shown in Fig. 3A, the burst signal obtained from the switch means 21 becomes as shown as D in Fig. 3B. Accordingly, the output of the phase detector 23 becomes positive and the output of the integration circuit 25 is obtained in a positive constant direct current voltage as shown as D in Fig. 3B.

Now let it be assumed that a state change operation of the flip-flop 27 occurring when the burst signal as shown as D in Fig. 3A is obtained from the switch means 21 performs a normal operation of the chrominance signal circuit. Then, the output voltage of the integration circuit 25 on the occasion of the normal operation is a negative constant direct current voltage as shown as D in Fig. 3A. Accordingly, the switching transistor 26 remains cut off and the horizontal pulse P1' is kept applied to the flip-flop 27 as a triggering input.

Now consider a case where a burst signal as shown as D in Fig. 3A is missing consecutively for two lines for some reason. Then during the above described two-line period when the burst signal is missing, the output of the phase detector 23 becomes zero volt. Therefore, the integrated voltage or the output voltage of the integration circuit 25 slightly increases for the above described two-line period as shown as G in Fig. 4 and the absolute value thereof accordingly decreases. However, since the time constant of the integration circuit 25 has been selected to be approximately ten lines, as described previously, the flip-flop 27 is properly kept supplied with the horizontal pulse P1', even if the burst signal is missing for such two or three lines, with the result that no malfunction is caused in the chrominance signal circuit.

The same also applies in case where a pseudo burst signal is superposed. More specifically, even if the output of the phase detector 23 changes in the positive going direction as different from the normal operation, for say two to three lines, by virtue of a pseudo burst signal, the integrated output of the integration circuit 25 still maintains the negative voltage. Therefore, the switching transistor 26 is kept cut off. Accordingly, even in such a situation, the horizontal pulse P1' is effectively kept applied to the flip-flop 27 as a drive input.

Now let it be assumed that the flip-flop 27 improperly operates for some reason and the 1/2 horizontal frequency pulse P2 as shown as C in Fig. 3B is obtained. Then, the burst signal as shown as D in Fig. 3B is obtained from the switch means 21 and therefore the output of the integration circuit 25 becomes as shown as G in Fig. 3B. Then the switching transistor 26 is rendered conductive. Accordingly, the horizontal pulse applied to the collector electrode of the switching transistor 26 is caused to flow through the transistor 26 now in conduction to the ground, with the result that the horizontal pulse is not applied to the flip-flop 27 as a drive input. Therefore, the flip-flop 27 maintains the state at that time, without causing a state change. Therefore, in such a situation, the switch means 21 is kept switched to either of the contacts 21a and 21b. Assuming that the switching means 21 is kept switched to the contact 21a, then the burst signal as shown as B in Fig. 3A is obtained from the switch means 21. Accordingly, the output of the phase detector 23 repeats an alternate change among the negative going direction and the positive going direction for each line, while the magnitude remains the same. Accordingly, the integrated voltage or the output voltage of the integration circuit 25 becomes zero volt. Therefore, the switching transistor 26 is again rendered non-conductive, so that the horizontal pulse P1′ is again applied to the flip-flop 27 as a drive input. Therefore, the flip-flop 27 again repeats a normal state change operation.

Now let it be assumed that a state change of the flip-flop 27 is stopped and the switch means 21 is kept switched to the contact 21b responsive to the output of the flip-flop 27. Then the operation directly opposite to the foregoing description applies, with the result that the output of the integration circuit 25 becomes zero volt. Therefore, the flip-flop 27 can again repeat a normal state change operation.

The above described embodiment is structured such that the output of the subcarrier oscillator 13 is applied through the +90° phase shifter 24 to the phase detector 23. However, alternatively, the output of the subcarrier oscillator 13 may be applied through a −90° phase shifter to the phase detector 23. In such a case, conversely to the foregoing description, the output of the integration circuit 25 becomes a positive constant direct current voltage on the occasion of a normal operation and becomes a negative voltage on the occasion of malfunction. Accordingly, the circuit should be structured such that the polarity of switching transistor 26 is selected such that a state change operation of the flip-flop 27 is stopped when the output of the voltage of the integration circuit 25 becomes negative.

The above described embodiment was structured such that on the occasion of malfunction the horizontal pulse P1′ is prevented from being applied to the flip-flop 27 as a drive input, whereby a state change of the flip-flop 27 is controlled. However, a modification to be described in the following may be considered. More specifically, the base electrode of any one of the transistors 27a and 27b included in the flip-flop 27 may be grounded when the voltage of the integration circuit 25 becomes a polarity different from that of the normal operation. Then, a circuit of one transistor in the flip-flop 27 is disabled and as a result a state change of the flip-flop is controlled.

**Claims**

1. A chrominance signal circuit in a color television receiver for receiving a color television signal including a subcarrier suppressed chrominance signal wherein a subcarrier is quadrature modulated by two color component signals, one of the modulation axes being 180° reversed for every second line, and a burst signal the phase of which is swung in synchronism with the reversion of said one modulation axis, said chrominance signal circuit comprising:

demodulating means (6, 7) for demodulating a subcarrier suppressed chrominance signal in said color television signal,

subcarrier generating means (13),

burst gate means (10),

first phase comparing means (12) for comparing the burst signal gated through said burst gate, with the output of said subcarrier generating means, the output signal of said first phase comparing means being used to control the oscillation phase of the subcarrier generating means,

subcarrier reversing means (15, 16, 17) for reversing a signal from said subcarrier generating means for every second line for providing the reversed subcarrier to said demodulating means for demodulating the chrominance signal of said one modulation axis,

two-state means (19, 27) assuming alternately one of the two states responsive to a horizontal pulse for controlling said subcarrier reversing means,

mode control means for controlling said two-state means to be correct output mode, characterized in that said mode control means comprises

phase shift means (21, 22) having switch means (21) responsive to the two-state means for switching the phase of the burst signal in 180 degrees in every second line,

second phase comparing means (23) for comparing the output of said phase shift means with the continuous wave different by 90 degree from the B—Y demodulating axis,

integration circuit means (25) for integrating the output of said second phase comparing means with a given time constant, and

state change controlling means (26) responsive to the output of said integration circuit means for controlling a state change of said two-state means.

2. A chrominance signal circuit in a color television receiver in accordance with claim 1, characterized in that said burst signal phase shift means (21, 22) is structured to reverse the phase of the burst signal.

3. A chrominance signal circuit in a color television receiver in accordance with claim 1, characterized in that said state change controlling means (26) is structured to prevent said horizontal pulse (P1′) from being applied to said two-state means (27).

4. A chrominance signal circuit in a color television receiver in accordance with claim 1, characterized in that said two-state means (27) comprises a flip-flop (27) having two circuit portions (27a, 27b) each assuming one state, and said horizontal pulse is applied to said flip-flop (27) as a drive input.

5. A chrominance signal circuit in a color television receiver in accordance with claim 4, characterized in that said state change controlling means (26) is structured to prevent said drive input from being applied to said flip-flop (27).

6. A chrominance signal circuit in a color television receiver in accordance with claim 4, characterized in that said state change controlling means (26) is structured to disable one circuit portion of said flip-flop.

7. A chrominance signal circuit in a color television receiver in accordance with claim 1, characterized in that said integration circuit means (25) is structured such that said time constant is longer than at least two lines.

8. A chrominance signal circuit in a color television receiver in accordance with claim 7, characterized in that the time constant of said integration circuit means (25) is selected to be longer than ten lines.

9. A chrominance signal circuit in a color television receiver in accordance with claim 1, characterized in that the phase of the output of said subcarrier generating means (13) is in the phase position of —(B—Y), and

subcarrier phase shift means (24) is provided for phase shifting said subcarrier by a predetermined phase, the output of said subcarrier phase shift means being applied to said second phase comparing means (23).

**Revendications**

1. Circuit de signaux de chrominance dans un récepteur de télévision couleur, destiné à recevoir un signal de télévision couleur comprenant un signal de chrominance à suppression de sous-porteuse dans lequel une sous-porteuse est modulée en quadrature par deux signaux composants de couleur, l'un des axes de modulation étant inversé de 180° une ligne sur deux, et une salve de synchronisation dont la phase est déviée en synchronisme avec l'inversion dudit axe de modulation, circuit qui comprend: des moyens démodulateurs (6, 7) pour démoduler le signal de chrominance à suppression de sous-porteuse contenu dans le signal de télévision couleur; un générateur de sous-porteuse (13); une porte de salve (10); un premier comparateur de phase (12) pour comparer la salve de synchronisation transmise par la porte de salve avec le signal de sortie du générateur de sous-porteuse, le signal de sortie de ce premier comparateur de phase étant utilisé pour commander la phase d'oscillation du générateur de sous-porteuse; des moyens inverseurs de sous-porteuse (15, 16, 17) pour inverser le signal provenant du générateur de sous-porteuse une ligne sur deux et délivrer la sous-porteuse inversée aux moyens démodulateurs pour démoduler le signal de chrominance dudit axe de modulation; un dispositif à deux états (19, 27) qui prend alternativement l'un de deux états en réponse à un top de ligne pour commander les moyens inverseurs de sous-porteuse; et des moyens de commande de mode, régissant le dispositif à deux états pour qu'il soit dans le mode de sortie correct; caractérisé en ce que les moyens de commande de mode comprennent: des moyens déphaseurs (21, 22) comportant des moyens commutateurs (21) qui réagissent au dispositif à deux états en commutant la phase de la salve de synchronisation de 180° une ligne sur deux; un second comparateur de phase (23) pour comparer le signal de sortie des moyens déphaseurs avec l'onde continue décalée de 90° par rapport à l'axe de démodulation du signal B—Y; un circuit d'intégration (25) pour intégrer le signal de sortie du second comparateur de phase avec une constante de temps donnée; et des moyens de commande de changement d'état (26) qui réagissent au signal de sortie du circuit d'intégration en commandant un changement d'état du dispositif à dexu états.

2. Circuit de signaux de chrominance pour récepteur de télévision couleur selon la revendication 1, caractérisé en ce que les moyens déphaseurs de la salve de synchronisation (21, 22) sont conçus de manière à inverser la phase de ladite salve.

3. Circuit de signaux de chrominance pour récepteur de télévision couleur selon la revendication 1, caractérisé en ce que les moyens de commande de changement d'état (26) sont conçus de manière à empêcher que le top de ligne (P1') soit appliqué au dispositif à deux états (27).

4. Circuit de signaux de chrominance pour récepteur de télévision couleur selon la revendication 1, caractérisé en ce que le dispositif à deux états (27) comprend un multivibrateur bistable (27) présentant deux parties de circuit (27a, 27b) dont chacune prend l'un des états, et en ce que le top de ligne est appliqué à ce multivibrateur bistable (27) en tant que signal d'entrée de commande.

5. Circuit de signaux de chrominance pour récepteur de télévision couleur selon la revendication 4, caractérisé en ce que les moyens de commande de changement d'état (26) sont conçus de manière à empêcher que le signal d'entrée de commande soit appliqué au multivibrateur bistable (27).

6. Circuit de signaux de chrominance pour récepteur de télévision couleur selon la revendication 4, caractérisé en ce que les moyens de commande de changement d'état (26) sont conçus de manière à invalider l'une des parties de circuit du multivibrateur bistable.

7. Circuit de signaux de chrominance pour récepteur de télévision couleur selon la revendication 1, caractérisé en ce que le circuit d'intégration (25) est conçu de telle manière que sa constante de temps soit plus longue que deux lignes au moins.

8. Circuit de signaux de chrominance pour récepteur de télévision couleur selon la revendication 7, caractérisé en ce que la constante de temps du circuit d'intégration (25) est choisie supérieure à dix lignes.

9. Circuit de signaux de chrominance pour récepteur de télévision couleur selon la revendication 1, caractérisé en ce que la phase du signal de sortie du générateur de sous-porteuse (13) est dans la position de phase de —(B—Y) et en ce que des moyens déphaseurs de sous-porteuse (24) sont prévus pour déphaser la sous-porteuse d'une phase prédéterminée, le signal de sortie de ces moyens déphaseurs de sous-porteuse étant appliqué au second comparateur de phase (23).

**Patentansprüche**

1. Chrominanzsignalschaltung in einem Farbfernsehempfänger für den Empfang eines Farbfernsehsignals, das ein Chrominanzsignal mit unterdrücktem Hilfsträger, in welchem der Hilfsträger mit zwei Farbkomponentensignalen quadraturmoduliert ist und eine der Modulationsachsen in jeder zweiten Zeile um 180° umgeschaltet wird, sowie ein Burst-Signal enthält, dessen Phase synchron zur Umschaltung der einen Modulationsachse geschwenkt wird, wobei die Chrominanzsignalschaltung aufweist:
Einen Demodulator (6, 7) zum Demodulieren des Chrominanzsignals mit unterdrücktem Hilfsträger in dem Farbfernsehsignal;
einen Hilfsträgergenerator (13),
ein Burst-Tor (10),
einen ersten Phasenvergleicher (12), der das vom Burst-Tor getastete Burst-Signal mit dem Ausgang des Hilfsträgergenerators vergleicht und dessen Ausgangssignal zum Steuern der Schwingungsphase des Hilfsträgergenerators dient, einen Hilfsträgerumschalter (15, 16, 17) zum Umkehren des Signals vom Hilfsträgergenerator in jeder zweiten Zeile, um den umgeschalteten Hilfsträger dem Demodulator zum Demodulieren des Chrominanzsignals mit der einen Modulationsachse zu liefern,
eine bistabile Schaltung (19, 27), die in Abhängigkeit von einem Zeilenimpuls abwechselnd einen von zwei Zuständen annimmt zum Steuern des Hilfsträgerumschalters, und Schaltzustandssteuermittel zum Steuern des korrekten Ausgangszustandes der bistabilen Schaltung,
dadurch gekennzeichnet, daß die Schaltzustandssteuermittel umfassen:
einen Phasenschieber (21, 22) mit von der bistabilen Schaltung gesteuerten Schaltmitteln (21) zum Schalten der Phase des Burst-Signals um 180° in jeder zweiten Zeile, einen zweiten Phasenvergleicher (23) zum Vergleichen des Ausgangs des Phasenschiebers mit der um 90° von der B—Y-Demodulationsachse versetzten kontinuierlichen Schwingung, eine Integrationsschaltung (25) zum Integrieren des Ausgangs des zweiten Phasenvergleichers mit einer gegebenen Zeitkonstante, und
Zustandsänderungssteuermittel (26), die in Abhängigkeit von Ausgang der Integrationsschaltung eine Zustandsänderung der bistabilen Schaltung steuern.

2. Farbsignalschaltung in einem Farbfernsehempfänger nach Anspruch 1, dadurch gekennzeichnet, daß der Phasenschieber (21, 22) für das Burst-Signal so ausgebildet ist, daß er die Phase des Burst-Signals umkehrt.

3. Chrominanzsignalschaltung in einem Farbfernsehempfänger nach Anspruch 1, dadurch gekennzeichnet, daß die Zustandsänderungssteuermittel (26) derart ausgebildet sind, daß sie die Zuführung des Zeilenimpulses (P1') zu der bistabilen Schaltung (27) verhindern.

4. Chrominanzsignalschaltung in einem Farbfernsehempfänger nach Anspruch 1, dadurch gekennzeichnet, daß die bistabile Schaltung (27) aus einem Flip-Flop (27) mit zwei Schaltungshälften (27a, 27b), von denen jede einen Zustand annimmt, besteht, und daß der Zeilenimpuls dem Flip-Flop (27) als Treiber-Eingangssignal zugeführt wird.

5. Chrominanzsignalschaltung in einem Farbfernsehempfänger nach Anspruch 4, dadurch gekennzeichnet, daß die Zustandsänderungssteuermittel (26) so ausgebildet sind, daß sie die Zuführung des Treiber-Eingangssignals zu dem Flip-Flop (27) verhindern.

6. Chrominanzsignalschaltung für einen Farbfernsehempfänger nach Anspruch 4, dadurch gekennzeichnet, daß die Zustandsänderungssteuermittel (26) so ausgebildet sind, daß sie eine Schaltungshälfte des Flip-Flop unwirksam machen.

7. Chrominanzsignalschaltung in einem Farbfernsehempfänger nach Anspruch 1, dadurch gekennzeichnet, daß die Integrationsschaltung (25) so ausgebildet ist, daß die Zeitkonstante größer ist als mindestens zwei Zeilen.

8. Chrominanzsignalschaltung in einem Farbfernsehempfänger nach Anspruch 7, dadurch gekennzeichnet, daß die Zeitkonstante der Integrationsschaltung (25) so gewählt ist, daß sie länger als zehn Zeilen ist.

9. Chrominanzsignalschaltung in einem Farbfernsehempfänger nach Anspruch 1, dadurch gekennzeichnet, daß die Phase des Ausgangs des Hilfsträgergenerators (13) die Phasenposition —(B—Y) hat und daß ein Hilfsträger-Phasenschieber (24) vorgesehen ist, der die Phase des Hilfsträgers um eine vorgegebene Phase verschiebt, wobei der Ausgang de Hilfsträger-Phasenschiebers dem zweiten Phasenvergleicher zugeführt wird (23).

Fig.1

Fig.2

0 009 237

Fig.3A

Fig.3B

Fig.4

2